# EUROPÄISCHE PATENTSCHRIFT

(11) **EP 0 319 697 B1**
(45) Veröffentlichungstag und Bekanntmachung des Hinweises auf die Patenterteilung: **22.06.1994**
(21) Anmeldenummer: 88118057.4
(22) Anmeldetag: 29.10.1988
(51) Int. Cl.: B26F 1/26, B29C 65/74

(54) **Verfahren zur Perforation von mit Kunststoff-Folien versiegelten Formteilen**
Method of perforating preforms coated with a plastic film
Méthode pour la perforation de préformes enrobées par un film en matière plastique

(30) Priorität: 08.12.1987 DE 3741499
(43) Veröffentlichungstag der Anmeldung: 14.06.1989
(73) Patentinhaber: Pelzer, Helmut, 58313 Herdecke (DE)
(72) Erfinder: Pelzer, Helmut, 58313 Herdecke (DE)
(74) Vertreter: Jönsson, Hans-Peter, Dr.Dipl.-Chem.

(56) Entgegenhaltungen:
- EP-A- 0 140 623
- EP-A- 0 141 556
- BE-A- 862 502
- DE-A- 1 479 840
- DE-A- 3 202 782
- DE-A- 3 521 374
- US-A- 3 258 511

## Beschreibung

Gegenstand der Erfindung ist ein Verfahren zur diskontinuierlichen Perforation eines dreischichtigen, tiefgezogenen Formteiles, das aus einer Textilschicht besteht, die auf ihrer einen Seite mit einer Kunststoffolie versiegelt und auf ihrer anderen Seite hinterschäumt ist, unter Anwendung von Heißluft,insbesondere eines Verkleidungs- beziehungsweise Dämpfungsmaterials für Kraftfahrzeuge. Weiterer Gegenstand der Erfindung ist eine Vorrichtung zur Durchführung des vorstehend angegebenen Verfahrens.

Es ist bekannt, Formteile auszubilden, die aus hinterschäumten textilem Werkstoff bestehen. Dabei ist auf die freiliegende Seite des textilen Werkstoffes eine Kunststoffolie aufkaschiert oder geklebt. Die Kunststoffolie dient im wesentlichen als Hilfsmaterial, um den textilen Werkstoff mit der Folie tiefziehen zu können und so die gewünschte Kontur des Formteiles herstellen zu können.

Da solche Formteile häufig aus Klimatisierunggründen oder aber auch wegen ihrer Schalldämm- und Absorptionsfunktion keine durch eine Kunststoffolie verschlossenen Fläche aufweisen sollen, besteht ein Bedürfnis dafür, derartige Formteile auf der mit Kunststoffolie versiegelten Seite mit einer Perforation zu versehen.

Aus der DE-AS 12 71 971 und der US-PS 30 12 918 und des weiteren aus der GB-PS 909 352 sind Verfahren zum kontinuierlichen Behandeln von einschichtigen, durchlaufenden Bahnen, also von hochflexiblen, im wesentlichen zweidimensionalen Gebilden bekannt bei denen eine Materialbahn über eine Walze läuft, die in einer gewissen flächenhaften Verteilung Bohrungen aufweist über denen das Bahnmaterial mittels Heißluftstrahlen perforiert oder wenigstens angeschmolzen wird.

Weiterhin ist es aus der DE-A-1 479 840 bekannt, kontinuierliche hergestellte Schweißnäthe längs zu durchtrennen oder eine diskontinuierliche Überlapptschweißung zwischen zwei Folien mit punktuellen durchlöcherten Schweißstellen.

Im Gegensatz dazu wird beim dem Verfahren nach der Erfindung eine diskontinuierliche Behandeln tiefgezogener, also im wesentlichen dreidimensionaler und mehrschichtiger Gebilde vorgenommen. Bei solchen Gebilden verbietet sich eine kontinuierliche Behandlung schon deswegen weil erfindungsgemäß als Folge der Beaufschlagung mit Heißluft nicht nur ein Prozeß abläuft, nämlich eine Folie lokal aufzuschmelzen, sondern es tritt ein weiterer Schritt zum Erzeugen eines Perforationskanales hinzu in den die geschmolzene Folie in einem dritten Schritt hineingeblasen wird und mit dem sie in einem vierten Schritt verklebt.

Ausgehend von diesem Stand der Technik liegt der Erfindung die Aufgabe zugrunde ein Verfahren und eine Vorrichtung zu dessen Durchführung anzugeben mit denen diskontinuierlich ein dreischichtiges, tiefgezogenes Formteil perforiert werden kann, das aus einer Textilschicht besteht, die auf ihrer einen Seite mit einer Kunstoffolie versiegelt und auf ihrer anderen Seite hinterschäumt ist.

Diese Aufgabe wird hinsichtlich des Verfahrens erfindungsgemäß dadurch gelöst, daß das vorgeformte Formteil in einer Form eingelegt wird deren Formbett die Konturen des Formteiles besitzt und
die über den Boden und die Wandung verteilt, Bohrungen aufweist, die mit einer Heißluftkammer in Verbindung stehen,
die mit einer druckerzeugenden Vorrichtung mit Heißluft versorgt wird,
welche den Kunststoff-Folienmantel der Schicht punktuell zum Schmelzen bringt und das aufgeschmolzene Material in die Textilschicht und teilweise bis in die Schaumschicht hineinbläst wodurch ein durchgehender Perforationskanal gebildet wird und das geschmolzene Material der Kunststoff-Folie mit dem textilen Werkstoff und/oder Schaum verklebt.

Die erfindungsgemäße Vorrichtung zur Durchführung dieses Verfahrens besteht darin, daß eine Form zur Aufnahme des Formteiles vorhanden ist mit einem Halterahmen zur Fixierung des Formteiles und die, gleichmäßig über Boden und Wandung verteilt, Bohrungen aufweist, welche mit einer Heißluftkammer verbunden sind, und eine die Heißluftkammer mit Heißluft versorgende, druckerzeugende Vorrichtung.

Dadurch, daß nach dem erfindungsgemäßen Verfahren die Kunststoffolie punktuell im Bereich der anzubringenden Perforationsdurchbrüche mit Heißluft einer Temperatur von beispielsweise 140°C bis 250°C beaufschlagt wird, schmilzt in diesem Bereich die Kunststoffolie auf, wobei das geschmolzene Material durch den Druck der Heißluft in das textile Material hineingeblasen und mit diesem Material verklebt wird. Dabei wird durch den anstehenden Luftdruck ein Durchgangskanal gebildet, der die Perforation offen hält.

Die Figuren zeigen in zum Teil schematischer Darstellung ein Ausführungsbeispiel der Vorrichtung nach der Erfindung anhand dessen das erfindungsgemäße Verfahren erläutert wird. Identische Gegenstände sind dabei mit gleichen Bezugszeichen versehen.

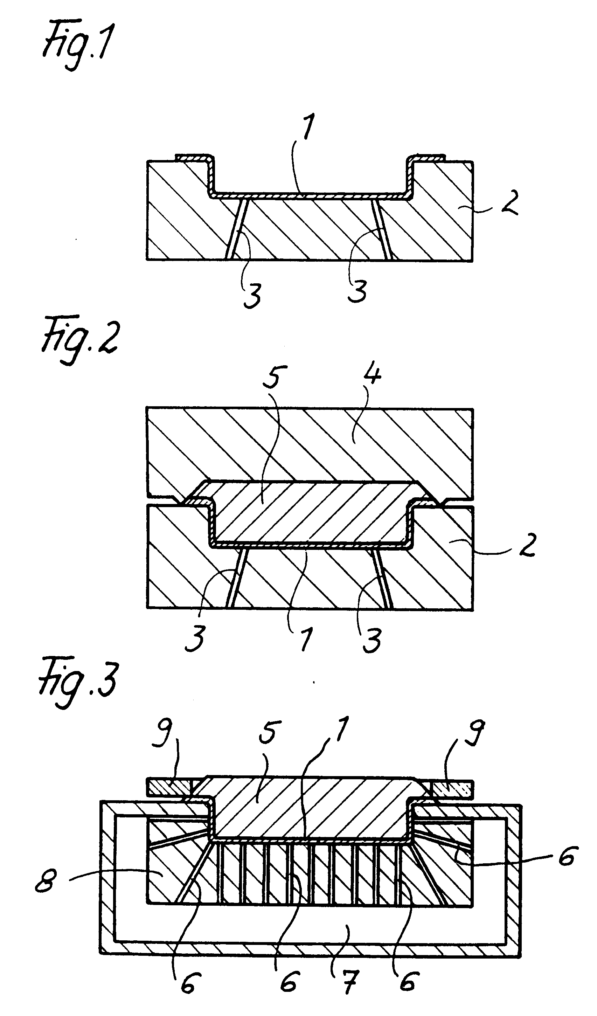

In der Figur 1 ist eine Form 2 mit Vakuumkanälen 3 schematisch dargestellt. In die Form ist eine Kunststoffolie und darüber ein textiles Material eingelegt, welche Einheit mit 1 bezeichnet ist. Durch den Vakuumsog wird dieses mit Folie kaschierte oder beklebte Material in die gewünschte Form gebracht.

Anschließend wird gemaß Figur 2 die Oberform 4 aufgebracht, die die gesamte Form zu einer geschlossenen Form ergänzt. In den zwischen der Oberform 4 und dem tiefgezogenen Teil 1 gebildeten Hohlraum werden die Komponenten eines aufschäumbaren Materials, beispielsweise PUR-Schaum 5 eingebracht. Die Kunststoffolie als Bestandteil des tiefgezogenen Teiles 1 verhindert dabei, daß die Komponenten des Schaummaterials in die Kanäle 3 eindringen können.

Das so gebildete Formteil wird aus der Form entnommen und in eine andere Form 8 gemäß Figur 3 eingelegt, wobei das Formbett die Kontur des Formteiles, insbesondere im Bereich des Bestandteiles 1 besitzt. Die Form 8 weist über den Boden und die Wandung verteilte Bohrungen 6 auf, die mit einer Heißluftkammer 7 der Form 8 in Verbindung stehen.

Die Heißluftkammer wird über eine druckerzeugende Vorrichtung mit Heißluft entsprechender Temperatur, beispielsweise 140°C bis 250°C versorgt. Dabei wird das Formteil, bestehend aus den Bestandteilen 1 und 5 mittels eines Halterahmens 9 gegen die Form 8 gepreßt und so lagerichtig gehalten.

Die aus den Kanälen 6 ausströmende Heißluft erhitzt punktuell das Kunststoffolienmaterial der Schicht 1 und bringt dieses punktuell zum Schmelzen.

Des weiteren wird mittels des Heißluftstromes das aufgeschmolzene Material in die Textilschicht und teilweise bis in die Schaumschicht 5 hineingeblasen, wo ein durchgehender Perforationskanal gebildet ist. das geschmolzene Material der Kunststoffolie verklebt mit dem textilen Werkstoff und/oder dem Schaum.

Je nach Art und Aufbau des textilen Werkstoffes und der darauf abgestimmten Kunststoffolie wird die Lufttemperatur, der Luftdruck und die Dauer der Einwirkung variiert.

## Patentansprüche

1. Verfahren zur diskontinuierlichen Perforation eines dreischichtigen, tiefgezogenen Formteiles(1,5), das aus einer Textilschicht besteht, die auf ihrer einen Seite mit einer Kunststoffolie versiegelt (1) und auf ihrer anderen Seite hinterschäumt ist, unter Anwendung von Heißluft, insbesondere eines Verkleidungs- beziehungsweise Dämpfungsmaterial für Kraftfahrzeuge,
dadurch gekennzeichnet,
daß das vorgeformte Formteil (1,5) in einer Form (8) eingelegt wird deren Formbett die Konturen des Formteiles (1,5) besitzt und
die über den Boden und die Wandung verteilt, Bohrungen (6) aufweist, die mit einer Heißluftkammer (7)in Verbindung stehen,
die mit einer druckerzeugenden Vorrichtung mit Heißluft versorgt wird,
welche den Kunststoff-Folienmantel der Schicht (1) punktuell zum Schmelzen bringt und das aufgeschmolzene Material in die Textilschicht und teilweise bis in die Schaumschicht (5) hineinbläst
wodurch ein durchgehender Perforationskanal gebildet wird und das geschmolzene Material der Kunststoff-Folie mit dem textilen Werkstoff und/oder Schaum (5) verklebt.

2. Vorrichtung zur Durchführung des Verfahrens nach Anspruch 1,
dadurch gekennzeichnet,
daß eine Form (8) zur Aufnahme des Formteiles (1,5) vorhanden ist mit einem Halterahmen (9) zur Fixierung des Formteiles (1,5) und die, gleichmäßig über Boden und Wandung verteilt,
Bohrungen (6) aufweist, welche mit einer Heißluftkammer (7) verbunden sind, und eine die Heißluftkammer (7) mit Heißluft versorgende, druckerzeugende Vorrichtung.

## Claims

1. Process for the discontinuous perforation of a three-layered, thermoformed shaped part (1,5), which comprises a textile layer which on its one side is sealed (1) by a plastic film and on its other side is foam-backed, by using hot air, in particular of a panelling or damping material for motor vehicles, characterized in that the preshaped shaped part (1,5) is placed in a mould (8), the mould bed of which has the contours of the shaped part (1,5) and which has, distributed over the bottom and walls, bore holes (6) which are in connection with a hot-air chamber (7), which is supplied by a pressure-generating apparatus with hot air which makes the plastic film sheath of the layer (1) melt at certain points and blows the melted material into the textile layer and partially through into the foam layer (5), whereby a perforation through-channel is formed and the molten material of the plastic film adhesively bonds with the textile material and/or foam (5).

2. Apparatus for carrying out the process according to Claim 1, characterized in that there is a mould (8) for receiving the shaped part (1,5), having a holding frame (9) for fixing the shaped part (1,5) and having, evenly distributed over bottom and walls, bore holes (6) which are connected to a hot-air chamber (7), and a pressure-generating apparatus, supplying the hot-air chamber (7) with hot air.

## Revendications

1. Procédé pour la perforation discontinue d'une pièce profilée (1,5) en trois couches, emboutie, qui se compose d'une couche de textile, scellée sur une de ses faces avec une feuille de matière plastique (1) et garnie de mousse en arrière sur son autre face, perforation obtenue par application d'air très chaud, en particulier pour un matériau de revêtement ou d'amortissement destiné à des véhicules automobiles, caractérisé en ce que la pièce profilée (1,5) préformée est insérée dans une matrice (8) dont le bâti possède les contours de la pièce profilée (1,5) et qui comporte des perçages (6) répartis sur le fond et la paroi, qui sont en communication avec une chambre d'air très chaud (7), alimentée par un dispositif générateur de pression en air très chaud, lequel fait fondre par points l'enveloppe de feuille de matière plastique de la couche (1) et fait pénétrer par soufflage le matériau fondu dans la couche de textile et en partie jusque dans la couche de mousse (5), par suite de quoi, un canal perforé en continu se trouve formé et le matériau fondu de la feuille de matière plastique se colle sur la matière textile et/ou la mousse (5).

2. Dispositif pour la réalisation du procédé selon la revendication 1, caractérisé en ce qu'il existe une matrice (8) pour recevoir la pièce profilée (1,5) avec un cadre de blocage (9) pour fixer la pièce profilée (1,5) et qui comporte des perçages (6) répartis régulièrement sur le fond et la paroi, qui sont en communication avec une chambre d'air très chaud (7) et en ce qu'il existe un dispositif générant de la pression et qui alimente la chambre (7) en air très chaud.
